# EUROPÄISCHE PATENTANMELDUNG

(11) **EP 3 178 702 A1**
(43) Veröffentlichungstag der Anmeldung: **14.06.2017**
(21) Anmeldenummer: 15198665.0
(22) Anmeldetag: 09.12.2015
(51) Int. Cl.: B60R 13/02

(54) **INNENVERKLEIDUNGSELEMENT FÜR EINEN INNENRAUM EINES FAHRZEUGS, INSBESONDERE EINES KRAFTWAGENS**

(71) Anmelder: Zettl Interieur GmbH, 84187 Weng (DE)
(72) Erfinder: Die Erfindernennung liegt noch nicht vor
(74) Vertreter: Hofstetter, Schurack & Partner

(57) **Zusammenfassung**

Die Erfindung betrifft ein Innenverkleidungselement (10) für einen Innenraum eines Fahrzeugs, mit wenigstens zwei an sich biegeschlaffen Verkleidungsteilen (12, 14), welche jeweilige umgeschlagene Endbereiche (16, 18) aufweisen und unter Ausbildung wenigstens eines zwischen den Verkleidungsteilen (12, 14) angeordneten und durch jeweilige sich an die Endbereiche (16, 18) anschließende Teilbereiche (24, 26) der Verkleidungsteile (12, 14) begrenzten Spalts (28) zumindest bereichsweise voneinander beabstandet sind, und mit wenigstens einem an sich biegeschlaffen Dekorelement (34), welches an den umgeschlagenen Endbereichen (16, 18) abgestützt und über die umgeschlagenen Endbereiche (16, 18) mit den Verkleidungsteilen (12, 14) verbunden ist und den Spalt (28) überbrückt.

## Beschreibung

Die Erfindung betrifft ein Innenverkleidungselement für einen Innenraum eines Fahrzeugs, insbesondere eines Kraftwagens.

Der DE 10 2013 017 382 A1 ist ein Innenverkleidungsteil für Fahrzeuge als bekannt zu entnehmen. Das Innenverkleidungsteil umfasst einen spritzgegossenen Träger und eine in den Träger integrierte Klappe, hinter welcher ein Airbag angeordnet ist. Ferner ist eine Textilschicht vorgesehen, welche in den Träger und in die Klappe eingegossen und damit in ihrer Ebene haft- und/oder formschlüssig mit dem Träger und der Klappe verbunden ist.

Die DE 10 2012 205 382 A1 offenbart ein Innenverkleidungsteil für ein Fahrzeug, mit mindestens zwei Schichten, wobei eine obere Schicht eine Dekorhaut ist. Dabei ist es vorgesehen, dass ein Dekorelement in einer Vertiefung der Dekorhaut angeordnet ist und mit der Dekorhaut über eine Ultraschallschweißnaht verbunden ist.

Ferner offenbart die DE 10 2010 033 885 A1 ein Innenverkleidungsteil für einen Innenraum eines Kraftfahrzeugs, mit einer Dekorschicht und mit zumindest einem Positionierungskörper, der mit der Dekorschicht verbunden ist und metallische und/oder ferromagnetische Eigenschaften aufweist.

Aufgabe der vorliegenden Erfindung ist es, ein Innenverkleidungselement zu schaffen, mittels welchem ein Innenraum eines Fahrzeugs, insbesondere eines Kraftwagens, auf besonders vorteilhafte Weise verkleidet werden kann, bei gleichzeitiger Realisierung einer vorteilhaften Herstellung des Innenverkleidungselements.

Diese Aufgabe wird durch ein Innenverkleidungselement mit den Merkmalen des Patentanspruchs 1 gelöst. Vorteilhafte Ausgestaltungen mit zweckmäßigen Weiterbildungen der Erfindung sind in den übrigen Ansprüchen angegeben.

Das erfindungsgemäße Innenverkleidungselement für einen Innenraum eines Fahrzeugs, insbesondere eines Kraftwagens wie beispielsweise eines Personenkraftwagens, umfasst wenigstens zwei an sich biegeschlaffe Verkleidungsteile. Dies bedeutet, dass die Verkleidungsteile für sich betrachtet biegeschlaff, das heißt formlabil sind. Dabei weisen die Verkleidungsteile jeweilige umgeschlagene Endbereiche auf. Durch dieses Umschlagen des jeweiligen Endbereichs ist der jeweilige Endbereich des jeweiligen Verkleidungsteils in Überdeckung beziehungsweise Überlappung mit wenigstens einem weiteren Bereich des jeweiligen Verkleidungsteils angeordnet, wobei der jeweilige Endbereich durch das Umschlagen einstückig mit dem jeweiligen Bereich ausgebildet ist. Die an sich biegeschlaffen Verkleidungsteile sind unter Ausbildung wenigstens eines Spalts zumindest bereichsweise voneinander beabstandet. Mit anderen Worten ist zumindest bereichsweise zwischen den Verkleidungsteilen ein Spalt angeordnet, über welchen die Verkleidungsteile voneinander beabstandet sind. Der Spalt ist somit zwischen den Verkleidungsteilen angeordnet und dabei durch jeweilige sich an die jeweiligen Endbereiche anschließende Teilbereiche der Verkleidungsteile begrenzt. Durch diese Teilbereiche sind beispielsweise jeweilige Ränder oder Kanten gebildet, welche den zwischen den Verkleidungsteilen angeordneten Spalt begrenzen.

Das erfindungsgemäße Innenverkleidungselement umfasst ferner wenigstens ein an sich biegeschlaffes Dekorelement, welches beispielsweise separat von dem Verkleidungsteilen ausgebildet ist. Ferner ist es denkbar, dass die Verkleidungsteile als separat voneinander ausgebildete und beispielsweise miteinander verbundene Teile ausgebildet sind. Alternativ dazu ist es denkbar, dass die Verkleidungsteile einstückig miteinander ausgebildet sind. Das Dekorelement ist an sich biegeschlaff, das heißt formlabil. Ferner ist das Dekorelement an den umgeschlagenen Endbereichen abgestützt und über die umgeschlagenen Endbereiche mit den Verkleidungsteilen verbunden. Somit sind beispielsweise die Verkleidungsteile über das mit den Verkleidungsteilen verbundene Dekorelement miteinander verbunden. Ferner überbrückt das Dekorelement den Spalt. Dies bedeutet, dass der Spalt zumindest in einem Längenbereich seiner Längserstreckung, insbesondere in einem zumindest überwiegenden Teil seiner Längserstreckung und vorzugweise über seine vollständige Längserstreckung, durch das Dekorelement überdeckt und somit verschlossen ist, sodass sich das Dekorelement beispielsweise zumindest über die vollständige, von einem ersten der Verkleidungsteile zu dem anderen Verkleidungsteil reichende Breite des Spalts erstreckt.

Mit anderen Worten erstreckt sich das Dekorelement beispielsweise zumindest ausgehend von einem der Verkleidungsteile durchgehend über die Breite des Spalts bis zu dem anderen Verkleidungsteil, wodurch der Spalt überbrückt ist. Mittels des erfindungsgemäßen Innenverkleidungselements lässt sich eine besonders vorteilhafte Verkleidung des Innenraums des Fahrzeugs realisieren, da sich auf besonders einfache und kostengünstige Weise eine besonders vorteilhafte optische Anmutung des Innenverkleidungselements und somit des Innenraums insgesamt darstellen lässt. Durch das Umschlagen der Endbereiche und das Verbinden des Dekorelements über die Endbereiche mit den Verkleidungsteilen kann das Innenverkleidungselement auf besonders einfache und kostengünstige Weise hergestellt werden, da die Anzahl an zur Herstellung des Innenverkleidungselements erforderlichen Prozessschritten und Hilfsmitteln besonders gering gehalten werden kann. Ferner kann durch das Umschlagen der Endbereiche eine besonders vorteilhafte optische Anmutung des Innenverkleidungselements selbst realisiert werden, da beispielsweise optisch unschöne Endkanten der Verkleidungsteile, insbesondere durch die zuvor genannten Bereiche, überdeckt werden und somit nicht sichtbar sind.

In vorteilhafter Ausgestaltung der Erfindung sind die jeweiligen Endbereiche zu einer einer Sichtseite der Verkleidungsteile abgewandten Rückseite der Verkleidungsteile hin umgeschlagen. Dadurch kann eine besonders vorteilhafte Verkleidung des Innenraums realisiert werden, da ungleichmäßige und optisch unschöne Kanten der Verkleidungsteile besonders einfach und kostengünstig verdeckt werden können, ohne die Verkleidungsteile besonders aufwändig und somit zeit- und kostenintensiv bearbeiten zu müssen.

Dabei hat es sich als besonders vorteilhaft gezeigt, wenn das Dekorelement zumindest überwiegend, insbesondere vollständig, auf der Rückseite angeordnet ist. Dies bedeutet, dass das Dekorelement nicht übermäßig oder gar nicht auf der Sichtseite angeordnet ist, sodass beispielsweise auch optisch unschöne Endkanten des Dekorelements auf einfache und kostengünstige Weise überdeckt werden können. Diese Endkanten werden beispielsweise durch die Verkleidungsteile überdeckt, sodass weder die Endkanten der Verkleidungsteile noch Endkanten des Dekorelements im fertig hergestellten Zustand des Innenverkleidungselements optisch wahrnehmbar sind.

Eine weitere Ausführungsform zeichnet sich dadurch aus, dass das Dekorelement eine dem Spalt zugewandte Sichtseite und eine dem Spalt abgewandte Rückseite aufweist, wobei die jeweiligen Sichtseiten durch den gleichen Werkstoff gebildet sind. Dies bedeutet, dass die Sichtseite des Dekorelements und die Sichtseiten der Verkleidungsteile durch den gleichen Werkstoff gebildet sind, sodass sich ein besonders vorteilhafter optischer Eindruck des Innenverkleidungselements auf einfache und kostengünstige Weise realisieren lässt.

Da die Sichtseite des Dekorelements dem Spalt zugewandt ist und der Spalt an sich als Durchgangsöffnung ausgebildet ist, kann die Sichtseite des Dekorelements über den Spalt beziehungsweise durch den Spalt hindurch von Betrachtern des Innenverkleidungselements optisch wahrgenommen werden. Unter der jeweiligen Sichtseite ist eine Seite zu verstehen, welche im fertig hergestellten Zustand des Innenverkleidungselements und insbesondere im fertig hergestellten Zustand des Fahrzeugs von sich im Innenraum des Fahrzeugs aufhaltenden Personen optisch wahrgenommen werden kann. Da die Rückseite der jeweiligen Sichtseite abgewandt ist, ist die jeweilige Rückseite eine Seite, welche von den sich im fertig hergestellten Zustand des Fahrzeugs im Innenraum des Fahrzeugs aufhaltenden Personen optisch nicht wahrgenommen werden kann. Insbesondere ist es möglich, dass die sich im Innenraum des fertig hergestellten Fahrzeugs aufhaltenden Personen die jeweilige Sichtseite auch haptisch wahrnehmen, das heißt berühren können.

Bei einer weiteren vorteilhaften Ausführungsform der Erfindung weist das Dekorelement wenigstens eine aus dem Werkstoff gebildete erste Schicht und wenigstens eine in Überdeckung mit der ersten Schicht angeordnete, zweite Schicht auf. Der genannte Werkstoff, durch welchen die jeweilige Sichtseite gebildet ist, ist ein erster Werkstoff, wobei die zweite Schicht aus einem vom ersten Werkstoff unterschiedlichen, zweiten Werkstoff gebildet ist. Dabei ist die zweite Schicht auf einer dem Spalt abgewandten Rückseite der ersten Schicht angeordnet. Durch den Einsatz der zwei Schichten können besonders vorteilhafte Eigenschaften des Dekorelements auf einfache Weise realisiert werden. Gleichzeitig können die Kosten des Dekorelements und somit des Innenverkleidungselements insgesamt gering gehalten werden, da die voneinander unterschiedlichen Werkstoff zum Einsatz kommen. Beispielsweise ist es möglich, die erste Schicht besonders dünn auszugestalten und mittels der zweiten Schicht zu verstärken.

In vorteilhafter Ausgestaltung der Erfindung umfasst die zweite Schicht wenigstens ein Textil. Mit anderen Worten ist die zweite Schicht beispielsweise durch wenigstens ein Textil gebildet. Ein solches Textil umfasst Fasern, welche, insbesondere textiltechnisch, miteinander verbunden sind. Insbesondere handelt es sich bei dem Textil um ein flächenförmiges textiles Gebilde, das heißt um ein textiles Flächenelement, wobei das Textil beispielsweise als Gewebe, Gewirke, Gestrick, Geflecht, Nähgewirke, Vliesstoff oder Filz ausgebildet ist. Die Fasern des Textils können dabei aus einem Kunststoff und somit als Kunststofffasern hergestellt sein. Alternativ oder zusätzlich ist es denkbar, dass das Textil Naturfasern umfasst.

Die erste Schicht des Dekorelements und/oder das jeweilige Verkleidungsteil umfasst beispielsweise wenigstens ein weiteres Textil, auf welches die Ausführungen zum ersten Textil der zweiten Schicht ohne weiteres übertragen werden können. Mit anderen Worten ist beispielsweise die erste Schicht und/oder wenigstens eines der Verkleidungsteile, insbesondere beide Verkleidungsteile, aus einem Textil gebildet. Alternativ oder zusätzlich ist es denkbar, dass die erste Schicht und/oder wenigstens eines der Verkleidungsteile beziehungsweise beide Verkleidungsteile Leder, insbesondere Naturleder oder Kunstleder, umfasst beziehungsweise aus Leder, insbesondere Naturleder oder Kunstleder, gebildet ist. Mit anderen Worten handelt es sich vorzugsweise bei dem die jeweilige Sichtseite bildenden Werkstoff um Leder, welches als Kunstleder oder Naturleder ausgebildet sein kann. Durch den Einsatz von Leder, insbesondere Kunstleder oder Naturleder, zum Bilden der jeweiligen Sichtseite kann eine besonders vorteilhafte, optisch und haptisch ansprechende und beispielsweise glatte Oberfläche realisiert werden.

Um das Dekorelement auf besonders einfache und vorteilhafte sowie optisch ansprechende Weise mit den Verkleidungsteilen zu verbinden, ist es bei einer weiteren Ausführungsform der Erfindung vorgesehen, dass das Dekorelement unter Ausbildung jeweiliger Nähte mit den Verkleidungsteilen vernäht und dadurch verbunden ist. Beispielsweise ist das Dekorelement mittels wenigstens einer ersten Naht mit einem ersten der Verkleidungsteile und mittels wenigstens einer zweiten Naht mit dem zweiten Verkleidungsteil vernäht und somit verbunden.

Dabei hat es sich als besonders vorteilhaft gezeigt, wenn die jeweilige Naht zumindest teilweise auf der Sichtseite angeordnet ist, sodass die jeweilige Naht von sich im Innenraum des fertig hergestellten Fahrzeugs aufhaltenden Personen zumindest teilweise optisch wahrnehmbar ist. Dadurch können aufwändige Maßnahmen zum Kaschieren der jeweiligen Naht vermieden werden bei gleichzeitiger Realisierung eines vorteilhaften optischen Eindrucks des Innenverkleidungselements.

Eine weitere Ausführungsform zeichnet sich dadurch aus, dass der Spalt einen bogenförmigen Verlauf aufweist. Alternativ oder zusätzlich ist es vorgesehen, dass das Dekorelement einen bogenförmigen Verlauf aufweist. Hierdurch kann eine besonders vorteilhafte und insbesondere optisch ansprechende Verkleidung des Innenraums realisiert werden. Insbesondere ist es möglich, den Verlauf des Spalts und/oder des Dekorelements an jeweilige, im Innenraum angeordnete Bauteile anzupassen, sodass eine besonders vorteilhafte Verkleidung des Innenraums dargestellt werden kann.

Bei einer weiteren vorteilhaften Ausführungsform der Erfindung weist das Dekorelement, insbesondere auf seiner Sichtseite, zumindest in einem in Überdeckung mit dem Spalt angeordneten Teilbereich eine Oberflächenstrukturierung auf, wobei die Oberflächenstrukturierung beispielsweise durch Prägen ausgebildet ist. Alternativ oder zusätzlich weist das Dekorelement, insbesondere auf seiner Sichtseite, zumindest in dem in Überdeckung mit dem Spalt angeordneten Teilbereich wenigstens eine Ausnehmung und/oder wenigstens eine Durchgangsöffnung auf. Die Ausnehmung beziehungsweise Durchgangsöffnung ist beispielsweise durch Stanzen, Laserstrahlschneiden oder Elektronenstrahlschneiden ausgebildet. Eine besonders hohe Qualität lässt sich jedoch realisieren, indem die Ausnehmung beziehungsweise Durchgangsöffnung durch Fräsen hergestellt wird.

Ist das Dekorelement in dem in Überdeckung mit dem Spalt angeordneten Teilbereich mit wenigstens einer Durchgangsöffnung versehen, so kann diese Durchgangsöffnung beispielsweise durch die zuvor beschriebene zweite Schicht überdeckt und somit verschlossen sein, sodass sich einerseits eine besonders vorteilhafte Verkleidung des Innenraums mittels des Innenverkleidungselements realisieren lässt. Andererseits kann mittels der zweiten Schicht vermieden werden, dass eine das Innenverkleidungselement betrachtende Person durch die Durchgangsöffnung hindurch blicken und beispielsweise hinter dem Innenverkleidungselement angeordnete Bauteile optisch wahrnehmen kann.

Schließlich hat es sich als besonders vorteilhaft gezeigt, wenn das Innenverkleidungselement wenigstens einen eigensteifen Träger aufweist. Ferner ist durch die Verkleidungsteile und das Dekorelement beispielsweise ein Bezug gebildet, wobei der eigensteife Träger zumindest teilweise mit dem Zug verkleidet beziehungsweise bezogen ist. Dabei ist der Bezug an dem Träger gehalten. Dadurch bildet das Innenverkleidungselement insgesamt ein Innenverkleidungsteil, welches, insbesondere über den Träger, auf einfache Weise gehandhabt und im Innenraum montiert werden kann. Dadurch kann der Innenraum auf besonders einfache und kostengünstige Weise sowie optisch ansprechend verkleidet werden.

Zur Erfindung gehört auch ein Fahrzeug, insbesondere ein Kraftwagen und insbesondere ein Personenkraftwagen, in dessen Innenraum wenigstens ein erfindungsgemäßes Innenverkleidungselement angeordnet ist, mittels welchem der Innenraum zumindest teilweise verkleidet ist. Insbesondere ist es vorgesehen, dass ein Aufbau wie beispielsweise der Rohbau beziehungsweise die Karosserie des Fahrzeugs zum Innenraum hin zumindest teilweise mittels des Innenverkleidungselements überdeckt und somit verkleidet ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Draufsicht eines Innenverkleidungselements für einen Innenraum eines Fahrzeugs, mit wenigstens zwei an sich biegeschlaffen Verkleidungsteilen und mit wenigstens einem an sich biegeschlaffen Dekorelement, welches in Überdeckung mit einem zwischen den Verkleidungsteilen angeordneten und durch die Verkleidungsteile zumindest teilweise begrenzenden Spalt angeordnet ist;
- Fig. 2: ausschnittsweise eine schematische Draufsicht des Innenverkleidungselements;
- Fig. 3: ausschnittsweise eine weitere schematische Draufsicht des Innenverkleidungselements; und
- Fig. 4: eine schematische Schnittansicht des Innenverkleidungselements.

In den Figuren sind gleiche oder funktionsgleiche Elemente mit gleichen Bezugszeichen versehen.

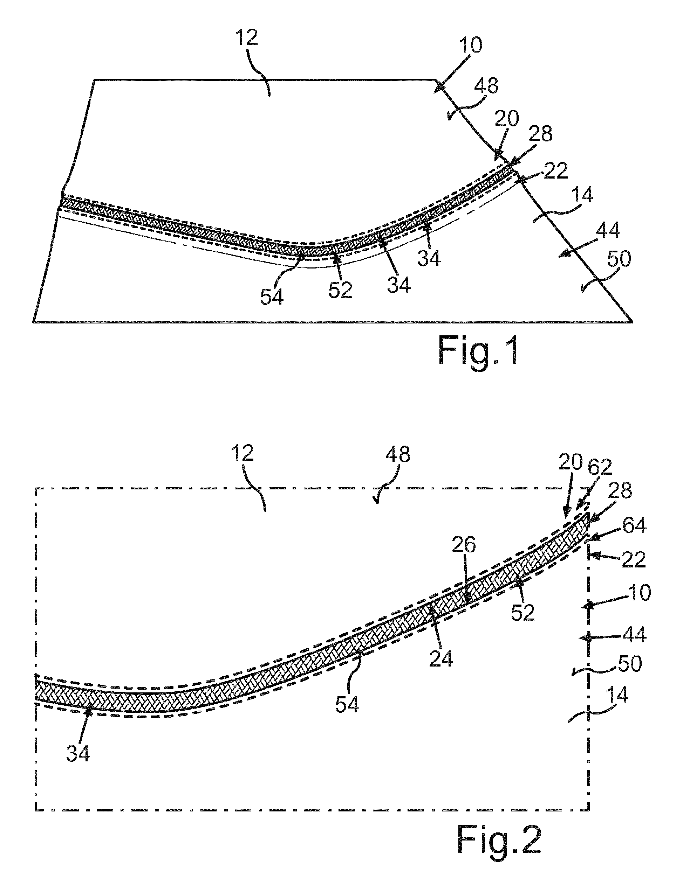

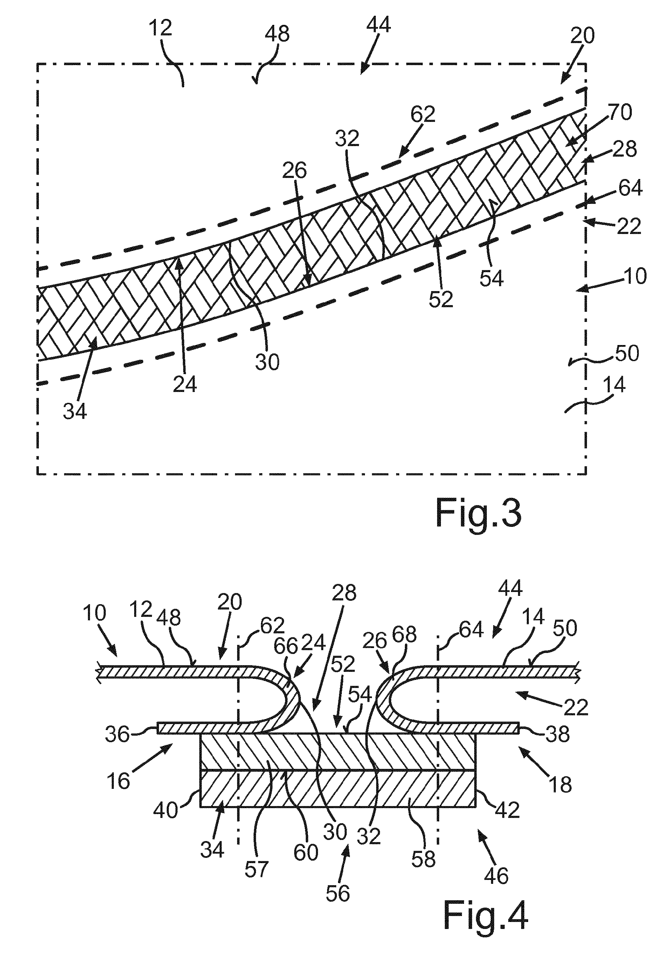

Fig. 1 zeigt in einer schematischen Draufsicht ein im Ganzen mit 10 bezeichnetes Innenverkleidungselement für einen Innenraum eines Fahrzeugs, insbesondere eines Kraftwagens wie beispielsweise eines Personenkraftwagens. Dabei zeigen Fig. 2 und 3 ausschnittsweise jeweilige weitere, vergrößerte Draufsichten des Innenverkleidungselements 10. Ferner zeigt Fig. 4 eine schematische Schnittansicht des Innenverkleidungselements 10. Wie aus einer Zusammenschau von Fig. 1 mit Fig. 2 bis 4 erkennbar ist, umfasst das Innenverkleidungselement 10 ein erstes an sich biegeschlaffes Verkleidungsteil 12, welches vorliegend aus Leder, insbesondere Kunstleder oder Naturleder, gebildet ist. Alternativ dazu ist es denkbar, dass das erste Verkleidungsteil 12 aus einem Textil, insbesondere aus einem textilen Flächenelement, gebildet ist. Das Innenverkleidungselement 10 umfasst ferner ein zweites an sich biegeschlaffes Verkleidungsteil 14, welches vorliegend ebenfalls aus Leder, insbesondere Naturleder oder Kunstleder, gebildet ist. Alternativ dazu ist es denkbar, dass das zweite Verkleidungsteil 14 aus einem Textil, insbesondere einem textilen Flächenelement, gebildet ist. Vorzugsweise sind die Verkleidungsteile 12 und 14 aus dem gleichen Werkstoff, vorliegend aus Leder, gebildet. Besonders gut aus Fig. 4 ist erkennbar, dass die Verkleidungsteile 12 und 14 jeweilige umgeschlagene Endbereiche 16 und 18 aufweisen. Durch dieses Umschlagen der Endbereiche 16 und 18 sind die Endbereiche 16 und 18 in Überdeckung beziehungsweise in Überlappung mit weiteren Bereichen 20 und 22 der Verkleidungsteile 12 und 14 angeordnet. Dabei ist der Endbereich 16 in Überdeckung beziehungsweise in Überlappung mit dem Bereich 20 angeordnet, wobei der Endbereich 16 einstückig mit dem Bereich 20 ausgebildet ist.

Analog dazu ist der Endbereich 18 in Überdeckung beziehungsweise in Überlappung mit dem Bereich 22 angeordnet, wobei der Endbereich 18 einstückig mit dem Bereich 22 ausgebildet ist. An die jeweiligen Endbereiche 18 schließen sich zu den jeweiligen Bereichen 20 und 22 hin jeweilige Teilbereiche 24 und 26 der Verkleidungsteile 12 und 14 an. Die Teilbereiche 24 und 26 sind somit Übergangsbereiche, wobei der Bereich 20 über den Teilbereich 24 in den Endbereich 16 und der Bereich 22 über den Teilbereich 26 in den Endbereich 18 übergeht. Dabei ist der Teilbereich 24 einstückig mit dem Bereich 20 und einstückig mit dem Endbereich 16 ausgebildet, wobei der Teilbereich 26 einstückig mit dem Bereich 22 und dem Endbereich 18 ausgebildet ist.

Aus Fig. 1 ist erkennbar, dass die Verkleidungsteile 12 und 14 vorliegend als separat voneinander ausgebildete und - wie im Folgenden noch genauer erläutert wird - miteinander verbundene Bauteile ausgebildet sind. Alternativ dazu ist es denkbar, dass die Verkleidungsteile 12 und 14 einstückig miteinander ausgebildet sind. Die Verkleidungsteile 12 und 14 sind dabei unter Ausbildung wenigstens eines zwischen den Verkleidungsteilen 12 und 14 angeordneten Spalts 28 zumindest bereichsweise voneinander beabstandet. Mit anderen Worten sind die Verkleidungsteile 12 und 14 entlang des Spalts 28 und über den Spalt 28 voneinander beabstandet, wobei - wie aus Fig. 4 erkennbar ist - der Spalt 28 an sich als Durchgangsöffnung ausgebildet ist. Dabei ist der Spalt 28 durch die jeweiligen, sich an die jeweiligen Endbereiche 16 und 18 anschließenden Teilbereiche 24 und 26 der Verkleidungsteile 12 und 14 begrenzt. Da die Endbereiche 16 und 18 umgeschlagen sind und über die Teilbereiche 24 und 26 in die Bereiche 20 und 22 übergehen, sind die Teilbereiche 24 und 26 geknickt oder gefaltet beziehungsweise weisen einen bogenförmigen oder geknickten Verlauf auf, sodass die Teilbereiche 24 und 26 jeweilige Rändern oder Kanten 30 und 32 bilden, durch welche der Spalt 28 begrenzt ist. Dabei ist die Kante 30 durch den Teilbereich 24 und die Kante 32 durch den Teilbereich 26 gebildet. Dabei sind die Kanten 30 und 32 als abgerundete Kanten ausgebildet.

Das Innenverkleidungselement 10 umfasst ferner wenigstens eine Dekorelement 34, welches an sich biegeschlaff ist. Unter der jeweiligen biegeschlaffen Ausgestaltung ist zu verstehen, dass das jeweilige Verkleidungsteil 12 beziehungsweise 14 beziehungsweise das Dekorelement 34 formlabil ist und somit beispielsweise wie ein einfacher Stofflappen seine Form nicht selbständig hält. Besonders gut aus Fig. 4 ist erkennbar, dass das Dekorelement 34 an den jeweiligen umgeschlagenen Endbereichen 16 und 18 abgestützt ist und über die umgeschlagenen Endbereiche 16 und 18 mit den Verkleidungsteilen 12 und 14 verbunden ist. Somit sind die Verkleidungsteile 12 und 14 über das Dekorelement 34 miteinander verbunden. Ferner ist besonders gut aus Fig. 1 bis 4 erkennbar, dass der an sich als Durchgangsöffnung ausgebildete Spalt 28 durch das Dekorelement 34 überbrückt ist. Dabei ist das Dekorelement 34 in Überdeckung mit dem Spalt 28 angeordnet, sodass der Spalt 28 zumindest in einem Längenbereich seiner Erstreckung und vorliegend über seine vollständige Längserstreckung durch das Dekorelement 34 überdeckt und somit verschlossen ist.

Hierdurch kann eine besonders vorteilhafte und einfache Verkleidung des Innenraums realisiert werden, da das Innenverkleidungselement 10 auf einfache Weise herstellbar ist. Durch das Umschlagen der Endbereiche 16 und 18 werden jeweilige Endkanten 36 und 38 der Verkleidungsteile 12 und 14, insbesondere durch die Bereiche 20 und 22, überdeckt und sind somit nicht sichtbar. Ferner werden auch Endkanten 40 und 42 des Dekorelements 34, insbesondere durch die Verkleidungsteile 12 und 14, überdeckt und sind somit nicht sichtbar. Dadurch können die Endkanten 36, 38, 40 und 42 auf besonders einfache und kostengünstige Weise, insbesondere ohne zusätzliche Hilfsmittel kaschiert werden.

Aus Fig. 4 ist besonders gut erkennbar, dass die jeweiligen Endbereiche 16 und 18 zu einer einer Sichtseite 44 der Verkleidungsteile 12 und 14 abgewandten Rückseite 46 hin umgeschlagen beziehungsweise umgeklappt oder umgebogen sind. Auf der Sichtseite 44 ist eine jeweilige Oberfläche 48 beziehungsweise 50 des jeweiligen Verkleidungsteils 12 beziehungsweise 14 angeordnet. Im fertig hergestellten Zustand des Fahrzeugs sind die Sichtseite 44 und somit die Oberflächen 48 und 50 von sich im Innenraum des fertig hergestellten Fahrzeugs aufhaltenden Personen sowohl optisch als auch haptisch wahrnehmbar, während die Rückseite 46 dem Innenraum abgewandt und somit nicht sichtbar ist. Vorliegend ist das Dekorelement 34 vollständig auf der Rückseite 46 angeordnet. Somit ist das Dekorelement 34 zur Rückseite 46 hin gegenüber der Sichtseite 44 und insbesondere gegenüber den Oberflächen 48 und 50 zurückversetzt.

Dabei weist das Dekorelement 34 eine dem Spalt 28 zugewandte Sichtseite 52 mit einer Oberfläche 54 auf, wobei die Sichtseite 52 und somit die Oberfläche 54 in zumindest teilweiser Überdeckung mit dem Spalt 28 angeordnet sind. Dadurch können die sich im Innenraum des fertig hergestellten Fahrzeugs aufhaltenden Personen die Sichtseite 52 und somit die Oberfläche 54 des Dekorelements 34 durch den Spalt 28 hindurch optisch wahrnehmen. Darüber hinaus weist das Dekorelement 34 eine der Sichtseite 52 und dem Spalt 28 abgewandte Rückseite 56 auf, welche von den sich im Innenraum aufhaltenden Personen nicht sichtbar ist. Vorliegend sind die Oberflächen 48 und 50 und somit die Sichtseite 44 durch das Leder gebildet, aus welchem die Verkleidungsteile 12 und 14 hergestellt sind. Dabei ist es vorzugsweise vorgesehen, dass auch die Sichtseite 52 beziehungsweise die Oberfläche 54 durch Leder, insbesondere Naturleder oder Kunstleder, gebildet ist. Mit anderen Worten ist es vorzugsweise vorgesehen, dass die Sichtseiten 44 und 52 aus dem gleichen Werkstoff gebildet sind, sodass vorzugsweise die Oberflächen 48, 50 und 54 aus dem gleichen Werkstoff gebildet sind. Dieser Werkstoff wird im Folgenden auch als erster Werkstoff bezeichnet.

Dabei weist das Dekorelement 34 eine aus dem ersten Werkstoff gebildete, erste Schicht 57 und eine zweite Schicht 58 auf, welche in zumindest teilweiser, insbesondere in zumindest überwiegender oder vollständiger, Überdeckung mit der ersten Schicht 57 angeordnet ist. Dabei ist es vorzugsweise vorgesehen, dass die zweite Schicht 58 aus einem vom ersten Werkstoff unterschiedlichen, zweiten Werkstoff gebildet ist. Ferner ist die zweite Schicht 58 auf eine der Sichtseite 52 und somit dem Spalt 28 abgewandten Rückseite 60 der ersten Schicht 57 angeordnet. Die Schichten57 und 58 sind miteinander verbunden. Insbesondere können die Schichten 57 und 58 miteinander verklebt und/oder miteinander vernäht sein.

Beispielsweise ist die erste Schicht 57 aus dem ersten Werkstoff, vorliegend Leder, gebildet. Beispielsweise ist die zweite Schicht 58 aus wenigstens einem Textil, insbesondere aus wenigstens einem textilen Flächenelement, gebildet, sodass die zweite Schicht 58 beispielsweise miteinander verbundene Fasern, insbesondere Kunststofffasern und/oder Naturfasern, umfasst.

Um eine besonders vorteilhafte Verkleidung des Innenraums zu realisieren, ist das Dekorelement 34 unter Ausbildung jeweiliger, besonders gut aus Fig. 2 und 3 erkennbarer Nähte 62 und 64 mit den Verkleidungsteilen 12 und 14 vernäht und dadurch verbunden. Vorliegend ist das Dekorelement 34 mittels der wenigstens einen Naht 62 mit dem Verkleidungsteil 12 vernäht und dadurch verbunden, wobei das Dekorelement 34 mittels der wenigstens einen Naht 64 mit dem Verkleidungsteil 14 vernäht und dadurch verbunden ist. Dabei ist das Dekorelement 34 mittels genau einer Naht 62 mit dem Verkleidungsteil 12 und mittels genau einer Naht 64 mit dem Verkleidungsteil 14 vernäht und dadurch verbunden. Die jeweilige Naht 62 beziehungsweise 64 durchdringt dabei den jeweiligen Bereich 20 beziehungsweise 22, den jeweiligen Endbereich 16 beziehungsweise 18 und das Dekorelement 34, sodass das Dekorelement 34 mittels der Nähte 62 und 64 mit den Verkleidungsteilen 12 und 14 vernäht ist. Dabei sind die Nähte 62 und 64 jeweils teilweise auf der Sichtseite 44 angeordnet, sodass die Nähte 62 und 64 jeweils teilweise von den sich im Innenraum aufhaltenden Personen optisch wahrnehmbar sind. Dabei weisen sowohl der Spalt 28 als auch das Dekorelement 34 einen bogenförmigen Verlauf auf, sodass sich der Spalt 28 und das Dekorelement 34 entlang ihrer jeweiligen Längserstreckungsrichtungen zumindest im Wesentlichen bogenförmig erstrecken. Auch die jeweilige Naht 62 beziehungsweise 64 weist eine der Längserstreckungsrichtung des Spalts 28 folgende Längserstreckungsrichtung auf, wobei die jeweilige Naht 62 beziehungsweise 64 einen an den bogenförmigen Verlauf des Spalts 28 angepassten und somit ebenfalls bogenförmigen Verlauf aufweist.

Mittels der Naht 62 ist der Endbereich 16 mit dem Bereich 20 verbunden, vorliegend vernäht, wobei mittels der Naht 64 der Endbereich 18 mit dem Bereich 22 verbunden, vorliegend vernäht, ist. Durch dieses jeweilige Vernähen ist der jeweilige Teilbereich 24 beziehungsweise 26 als den Spalt 28 begrenzende Wulst 66 beziehungsweise 68 ausgebildet, wodurch sich ein besonders hochwertiger optischer Eindruck realisieren lässt.

Aus Fig. 2 und 3 ist besonders gut erkennbar, dass das Dekorelement 34 auf seiner Sichtseite 52 zumindest in einem in Überdeckung mit dem Spalt 28 angeordneten Teilbereich eine Oberflächenstrukturierung 70 aufweist. Mit anderen Worten ist die Oberfläche 54 mit einer Strukturierung versehen, durch welche die Oberflächenstrukturierung 70 gebildet ist. Vorliegend ist die Oberflächenstrukturierung 70 durch Prägen hergestellt. Alternativ oder zusätzlich ist es denkbar, dass das Dekorelement 34 zumindest in einem mit dem Spalt 28 in Überdeckung angeordneten Teilbereich, insbesondere auf der Sichtseite 52, wenigstens eine Ausnehmung und/oder wenigstens eine Durchgangsöffnung aufweist. Insbesondere ist es möglich, auf der Sichtseite 52 insbesondere in einem mit dem Spalt 28 in Überdeckung angeordneten Teilbereich ein Muster des Dekorelements 34 vorzusehen, wobei dieses Muster beispielsweise als Budapester-Muster ausgebildet ist und/oder eine Mehrzahl von Durchgangsöffnungen und/oder Ausnehmungen der Oberfläche 54 umfasst. Dadurch kann der Innenraum besonders gut verkleidet werden.

Im fertig hergestellten Zustand des Fahrzeugs bilden die Verkleidungsteile 12 und 14 und das Dekorelement 34 beispielsweise einen Bezug, wobei das Innenverkleidungselement 10 einen in Fig. 1 bis 4 nicht dargestellten, eigensteifen, das heißt formstabilen Träger umfassen kann, an welchem der Bezug gehalten ist. Dadurch ist der Träger mit dem Bezug bezogen und somit zumindest teilweise verkleidet. Somit stellt das Innenverkleidungselement 10 beispielsweise ein Modul dar, welches insbesondere über den Träger einfach gehandhabt und verbaut werden kann.

## Patentansprüche

1. Innenverkleidungselement (10) für einen Innenraum eines Fahrzeugs, mit wenigstens zwei an sich biegeschlaffen Verkleidungsteilen (12, 14), welche jeweilige umgeschlagene Endbereiche (16, 18) aufweisen und unter Ausbildung wenigstens eines zwischen den Verkleidungsteilen (12, 14) angeordneten und durch jeweilige sich an die Endbereiche (16, 18) anschließende Teilbereiche (24, 26) der Verkleidungsteile (12, 14) begrenzten Spalts (28) zumindest bereichsweise voneinander beabstandet sind, und mit wenigstens einem an sich biegeschlaffen Dekorelement (34), welches an den umgeschlagenen Endbereichen (16, 18) abgestützt und über die umgeschlagenen Endbereiche (16, 18) mit den Verkleidungsteilen (12, 14) verbunden ist und den Spalt (28) überbrückt.

2. Innenverkleidungselement (10) nach Anspruch 1,
wobei die jeweiligen Endbereiche (16, 18) zu einer einer Sichtseite (44) der Verkleidungsteile (12, 14) abgewandten Rückseite (46) der Verkleidungsteile hin umgeschlagen sind.

3. Innenverkleidungselement (10) nach Anspruch 2,
wobei das Dekorelement (34) zumindest überwiegend, insbesondere vollständig, auf der Rückseite (46) angeordnet ist.

4. Innenverkleidungselement (10) nach Anspruch 2 oder 3,
wobei das Dekorelement (34) eine dem Spalt (28) zugewandte Sichtseite (52) und eine dem Spalt (28) abgewandte Rückseite (56) aufweist, wobei die jeweiligen Sichtseiten (44, 52) durch den gleichen Werkstoff gebildet sind.

5. Innenverkleidungselement (10) nach Anspruch 4,
wobei das Dekorelement (34) wenigstens eine aus dem Werkstoff gebildete erste Schicht (57) und wenigstens eine in Überdeckung mit der ersten Schicht (57) angeordnete, zweite Schicht (58) aufweist, welche aus einem von dem ersten Werkstoff unterschiedlichen, zweiten Werkstoff gebildet ist, wobei die zweite Schicht (58) auf einer dem Spalt (38) abgewandten Rückseite (60) der ersten Schicht (57) angeordnet ist.

6. Innenverkleidungselement (10) nach Anspruch 5,
wobei die zweite Schicht (58) wenigstens ein Textil umfasst

7. Innenverkleidungselement (10) nach einem der vorhergehenden Ansprüche, wobei das Dekorelement (34) unter Ausbildung jeweiliger Nähte (62, 64) mit den Verkleidungsteilen (12, 14) vernäht und dadurch verbunden ist.

8. Innenverkleidungselement (10) nach Anspruch 7 und einem der Ansprüche 2 bis 6,
wobei die jeweilige Naht (62, 64) zumindest teilweise auf der Sichtseite (44) der Verkleidungsteile (12, 14) angeordnet ist.

9. Innenverkleidungselement (10) nach einem der vorhergehenden Ansprüche, wobei der Spalt (28) einen bogenförmigen Verlauf aufweist.

10. Innenverkleidungselement (10) nach einem der vorhergehenden Ansprüche, wobei das Dekorelement (34) einen bogenförmigen Verlauf aufweist.

11. Innenverkleidungselement (10) nach einem der vorhergehenden Ansprüche, wobei das Dekorelement (34) zumindest in einem in Überdeckung mit dem Spalt (28) angeordneten Teilbereich eine Oberflächenstrukturierung (70) aufweist und/oder mit wenigstens einer Ausnehmung und/oder mit wenigstens einer Durchgangsöffnung versehen ist.

12. Innenverkleidungselement (10) nach einem der vorhergehenden Ansprüche, wobei durch die Verkleidungsteile (12, 14) und das Dekorelement (34) ein Bezug gebildet ist, und wobei ein eigensteifer und zumindest teilweise mit dem Bezug verkleideter Träger vorgesehen ist, an welchem der Bezug gehalten ist.

13. Fahrzeug, insbesondere Kraftwagen, in dessen Innenraum wenigstens ein Innenverkleidungselement (10) nach einem der vorhergehenden Ansprüche angeordnet ist.
